(19) Europäisches Patentamt / European Patent Office / Office européen des brevets

(11) **EP 2 937 835 A1**

(12) **EUROPEAN PATENT APPLICATION**

(43) Date of publication:
**28.10.2015 Bulletin 2015/44**

(51) Int Cl.:
***G06T 3/40*** (2006.01)

(21) Application number: **14165409.5**

(22) Date of filing: **22.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ceva D.S.P. Ltd.**
**4673302 Herzlia Pituach (IL)**

(72) Inventors:
• **Gal, Danny N.**
**Even Yehuda (IL)**

• **Paz, Adar**
**Tel-Aviv (IL)**
• **Sadeh, Roni M.**
**44446 Kfar Saba (IL)**

(74) Representative: **Pearl Cohen Zedek Latzer Baratz UK LLP**
**The Gridiron Building**
**One Pancras Square**
**London N1C 4AG (GB)**

(54) **System and method for generating a super-resolution image**

(57) System and method for generating a super-resolution image by obtaining a plurality of source images of a scene, the images are sub-pixel shifted views of the scene, calculating sub-pixel distances between pairs of source images (420), selecting a subset of source images from the plurality of the source images based at least on the sub-pixel distances (440), and generating the super-resolution image from the subset of the source images, the super-resolution image having a higher resolution than each of the source images. In addition, a quantitative measure of image quality of the source images may be calculated (430) and the selection of the subset may be based also on the measure of image quality (440).

EP 2 937 835 A1

DIVIDE IMAGES INTO BLOCKS — 410

430 — CALCULATE A QUANTITATIVE MEASURE OF IMAGE QUALITY OF THE SOURCE IMAGES

420 — CALCULATE SUB-PIXEL DISPLACEMENTS BETWEEN PAIRS OF SOURCE IMAGES

SELECT A SUBSET OF SOURCE IMAGES BASED ON THE SUB-PIXEL DISPLACEMENTS AND/OR THE QUANTITATIVE MEASURE OF IMAGE QUALITY — 440

Fig. 4

**Description**

**BACKGROUND**

In today's cameras and smart devices with camera there is a wide range of resolution levels, from 4m pixel to 32 m pixel, where the higher resolution cameras offer better image quality, especially for enlarged images. The low cost devices have lower quality hardware and typically offer lower resolution images. It is possible to enhance the perceived resolution of low resolution images, by automatically taking multiple images of the same scene and fusing the images together. Thus, it may be possible to increase the perceived quality of images taken by the low cost devices.

Super-resolution (SR) is a class of techniques that enhance the resolution of an imaging system by using information present at several different low-resolution images of substantially the same scene to create one high-resolution image. Super-resolution generation may work effectively when several low-resolution images contain slightly different perspectives of the same scene. If the images are displaced in the sub-pixel range, than each image may include different information gathered at slightly different sampling points. Combining information from the different sampling points may be seen as increasing the sampling rate of the image. Thus, a higher resolution image may be provided.

To obtain different looks of the same scene, a relative displacement should exist between the low-resolution images. If the displacement between images is known or can be estimated, reconstruction of a high-resolution image, also referred to as supper resolution image, is possible by combining the low-resolution images.

Although the main concern of the supper-resolution algorithms is to reconstruct high-resolution images from low-resolution images, the same technique may be used to produce a high quality image from a plurality of noisy, blurred, aliased or otherwise degraded images.

**SUMMARY**

According to embodiments of the present invention, there is provided a method for generating a super-resolution image, the method may include: obtaining a plurality of source images of a scene, the source images are sub-pixel shifted views of the scene; calculating sub-pixel distances between pairs of source images; selecting a subset of source images from the plurality of the source images based at least on the sub-pixel distances; and generating the super-resolution image from the subset, the super-resolution image having a higher resolution than each of the source images.

Furthermore, according to embodiments of the present invention, selecting may include: when the subset includes two source images, selecting the two source images for which a sub-pixel distance is maximal; and when the subset includes more than two source images, selecting the subset by: calculating sums of the sub-pixel distances for groups of source images, the groups consisting of an equal number of more than two source images; and selecting the group for which a sum of the sub-pixel distances is maximal.

Furthermore, according to embodiments of the present invention, selecting may include: when the subset includes two source images, selecting the two source images for which a sub-pixel distance is maximal; and when the subset includes more than two source images, selecting the subset by: calculating multiplication of the sub-pixel distances for groups of source images, the groups consisting of an equal number of more than two source images; and selecting the group for which a multiplication of the sub-pixel distances is maximal.

Furthermore, according to embodiments of the present invention, the distances may be calculated locally at different areas of the pairs of source images.

Furthermore, according to embodiments of the present invention, the method may include: calculating a quantitative measure of image quality of the source images, wherein the selection of the subset may be based also on the measure of image quality.

Furthermore, according to embodiments of the present invention, the quantitative measure of image quality may be image sharpness.

Furthermore, according to embodiments of the present invention, the measure of image quality may be calculated locally at different areas of the source images.

Furthermore, according to embodiments of the present invention, selecting the subset may be performed locally at the different areas of the source images.

Furthermore, according to embodiments of the present invention, the method may include determining the number of source images in the subset based on available computing power.

Furthermore, according to embodiments of the present invention, the method may include determining how many source images to acquire based on the number of source images in the subset.

According to embodiments of the present invention, a computer readable medium may include instructions which when implemented in a data processing system, cause the system to perform the method disclosed herein.

According to embodiments of the present invention, there is provided a system for generating a super-resolution image, the system may include: a memory; and a processor configured to implement the method disclosed herein.

## BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is a high-level diagram of an exemplary system for generating super-resolution images according to embodiments of the present invention;
Fig. 2 is a high-level diagram of another exemplary system for generating super-resolution images according to embodiments of the present invention;
Fig. 3 is a flowchart of a method for generating super-resolution images according to embodiments of the present invention;
Fig. 4 is a flowchart of a method for selecting a subset of source images from a plurality of source images for generating a super-resolution image according to embodiments of the present invention;
Fig. 5, depicts pixel arrangement of two shifted images or sub-blocks; and
Fig. 6 depicts relative pixel locations of an exemplary set of four sub-pixel shifted source images.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Although embodiments of the present invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the present invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. Unless explicitly stated, the method embodiments described herein are not constrained to a particular order or sequence. Additionally, some of the described method embodiments or elements thereof can occur or be performed at the same point in time.

Generating a higher resolution image from a plurality of lower resolution source images is a computationally intensive process that consumes a considerable amount of computing power. This may pose a problem for low cost devices, with relatively weak processors, especially if the result is to be shown immediately. Moreover, this computationally intensive process is expected to have high power consumption. It has been observed, that generating a super-resolution image from a first and a second source images that are sub-pixel shifted, may add significant value in comparison to a single source image. Adding a third source image to the super-resolution process may improve the quality of the super-resolution image, but to a lesser extent in comparison to the addition of the second image. Generally speaking, the contribution of each source image that is added to the super-resolution process may decrease as the number of source images increase. According to embodiments of the present invention, a subset of source images may be selected from a set of source images to generate a super-resolution image. The selection is made such that the perceived quality of the resultant super-resolution image will be close to that of a super-resolution image that would have been generated from the full set of source images. The subset may be intelligibly selected based on predefined criteria so that the selected subset may include more information comparing to other possible subsets. The advantage of a smaller number of source images is that the calculation time is shorter, allowing a simple camera with a relatively weak central processing unit

EP 2 937 835 A1

(CPU) to perform image enhancements substantially in real time. The criteria for selecting the subset of images may include, for example, sub-pixel distances and a quantitative measure of image quality.

According to embodiments of the present invention, a super-resolution image having a resolution higher than each of a plurality of source images may be generated by obtaining a plurality of source images of a scene, the source images may include sub-pixel shifted views of the scene, calculating sub-pixel distances between pairs of source images, selecting a subset of source images from the plurality of the source images based at least on the sub-pixel distances, and generating the super-resolution image from the subset. In addition, a quantitative measure of image quality of the source images may be calculated and the selection of the subset may be based also on the measure of image quality.

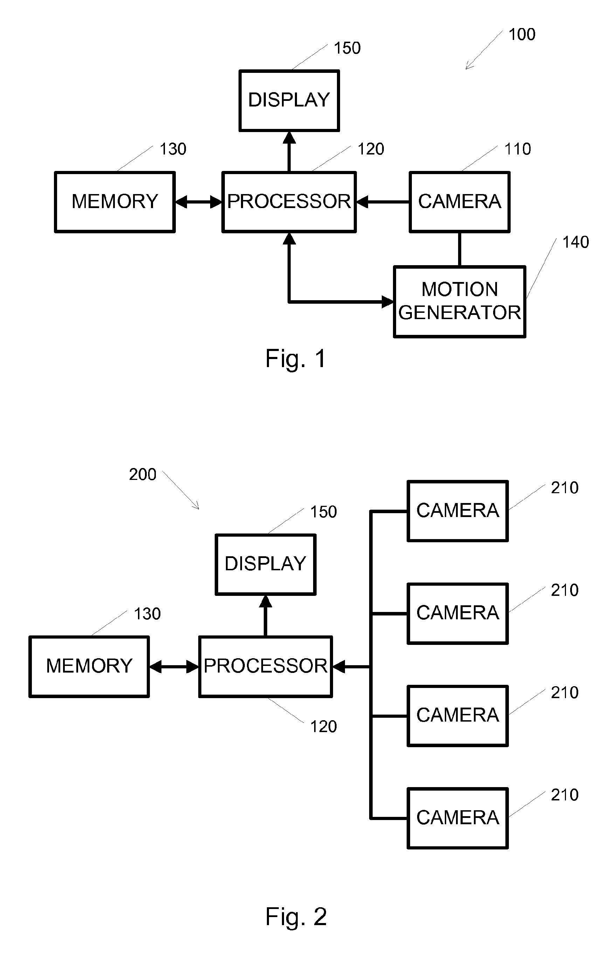

Reference is made to Fig. 1 which is a high-level diagram of an exemplary system for generating super-resolution images, according to embodiments of the present invention. According to embodiments of the present invention, a system 100 may include a camera or a capturing device 110, a processor 120, a display unit 150 for displaying images and a memory unit 130.

Processor 120 may be configured to execute commands included in a program, algorithm or code stored in memory 130. Processor 120 may include components such as, but not limited to, one or more central processing units (CPU's), one or more digital signal processors (DSP's), or any other suitable multi-purpose or specific processors or controllers, one or more input units, one or more output units or any other suitable hardware components and/or software components. Processor 120 may be any computational device configured to execute various operations included in some methods disclosed herein. Memory 130 may be a non-transitory computer-readable storage medium that may store thereon instructions that when executed by processor 120, cause processor 120 to perform operations and/or methods, for example, the method disclosed herein.

Camera 110 may include any device or component that may capture images, such as a Charge Coupled Device (CCD) camera or imager, a Complementary Metal Oxide Semiconductor (CMOS) camera or imager, a digital camera, a stills camera, a video camera, or other suitable imagers, cameras, or image acquisition components. Images captured by camera 110 may be sent or otherwise transferred, on-line or off-line to processor 120 for further processing. For example, camera 110 may capture a plurality of source images including sub-pixel shifted views of a scene. As used herein, shifted views of a scene may include any combination of relative rotational displacements and relative translational displacements of the scene between the images. Additionally, the relative rotational and translational displacements between the images may or may not be fixed across a pair of images. The shifted views of a scene may be a result of movements of camera 110 of a result of movements of the scene.

Camera 110 may capture a plurality of source or original images that represent sifted views of a scene by any applicable manner. For example, multiple shifted views of a scene may be obtained from one camera 110 with several captures. For example, camera 110 may capture a sequence of images or frames in which some relative scene motions exist from image to image, e.g., a video sequence. In this case, camera 110 may be stationary. Additionally or alternatively, multiple shifted views of a scene may be obtained from one camera 110 by capturing a sequence of images and moving camera 110 between captures. Displacements of camera 110 from image to image may be achieved by natural movement of the hands of the photographer who is taking the images.

System 100 may optionally include a motion generator 140 to generate either controlled or uncontrolled displacements of camera 110. The displacement may be controlled by processor 120, or at least known to processor 120, or the displacement may be calculated using any suitable motion detection algorithms as known in the art. For example, motion generator 140 may include a vibrating device to generate uncontrolled motions of camera 110. Motion generator 140 may include an orbiting satellite onto which camera 110 may be installed. Other types of motion generators may be utilized, to fit specific applications.

Processor 120 may be configured to obtain the plurality of source images, select a subset of images from the plurality of the source images based on predefined criteria, and generate a super-resolution image of the scene from the subset. The super-resolution image may have a higher resolution than each of the source (original) images. Processor 120 may be configured to obtain source images from camera 110. System 100 may not necessarily include camera 110. For example, processor 120 may obtain the source images from a separate device. For example, processor 120 may obtain a video film and generate super-resolution images from frames of the video film, each time taking a group of consecutive frames of the video as the source images.

Reference is now made to Fig. 2 which is a high-level diagram of another exemplary system for generating super-resolution images according to embodiments of the invention. A system 200 may include components that are substantially similar to system 100. These components are given the same reference numeral and will not be discussed in detail. System 200 includes a plurality of cameras 210, slightly displaced one from each other. Cameras 210 may capture images of the same scene at the same time. The relative displacement between the acquired images may be obtained by the relative displacement between cameras 210. Each one of cameras 210 may include any device or component that may capture images, such as a Charge Coupled Device (CCD) camera or imager, a Complementary Metal Oxide Semiconductor (CMOS) camera or imager, a digital camera, a stills camera, or other suitable imagers, cameras, or image acquisition components.

4

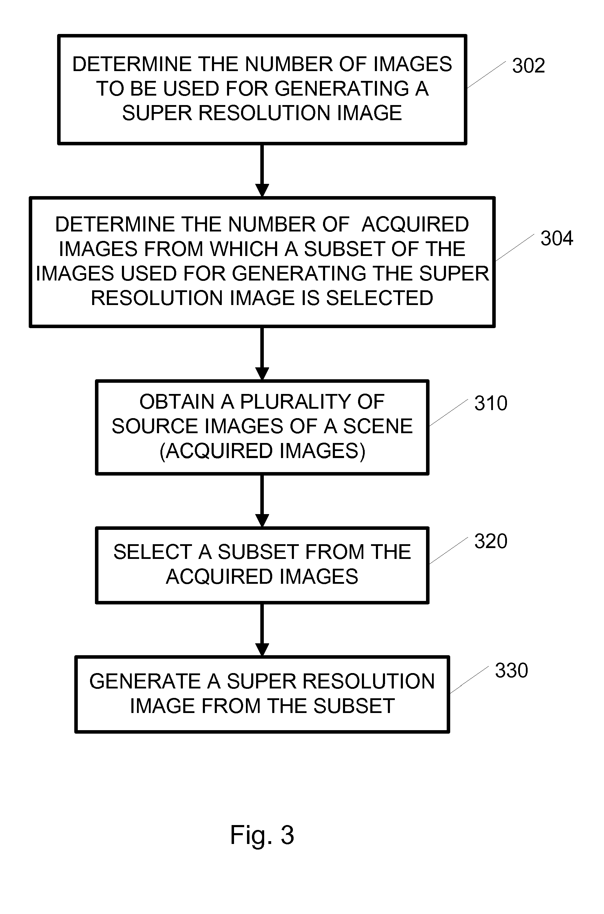

Reference is now made to Fig. 3 which is a flowchart of a method for generating super-resolution images according to embodiments of the present invention. In a preliminary operation 302, the number of images to be used for generating a super-resolution image, namely, the number of images in a subset of source images may be determined. For example, the number of images to be used for generating the super-resolution image may be based on available computing power. For example, the number of images in the subset may be selected to ensure reasonable processing time so that generation of super-resolution images would appear as a real-time process to a viewer. In operation 304, the number of source images of the same scene to be acquired and from which the subset to be selected may be determined based on the determined number of subset images. For example, the number of source images of the same scene that may be required may be set to twice the number of images in the subset. Operations 302 and 304 are optional and the number of images in the subset and the number of source images of the same scene that need to be acquired may be predetermined and preprogrammed.

In operation 310, a plurality of source images also refer herein as original images of a scene may be obtained. The source images may include sub-pixel shifted views of the scene. The sub-pixel shifted views may be obtained for example, by capturing a sequence of images or frames in which some relative scene motions exist from image to image, or by capturing a sequence of images and moving the camera between captures, or by capturing images by a plurality of cameras, which are slightly displaced one from each other.

In operation 320, a subset of the acquired source images may be selected based on predetermined one or more criteria. If more than one criterion is used, a different weight may be assigned to each criterion and a weight function may calculate the final score for each subset. The criteria may be based on sub-pixel distances or on image quality, or on both, as disclosed herein. In operation 330, a super-resolution image may be generated using the selected source images which are included in the subset, the super-resolution image having a higher resolution or otherwise improved quality than each of the source images. In some applications, the number of source images may range from four to six, and the subset may include two or three selected images. However, embodiments of the present invention are generic to any number of acquired source images and any number of selected source images. The number of selected source images is smaller than the number of acquired source images.

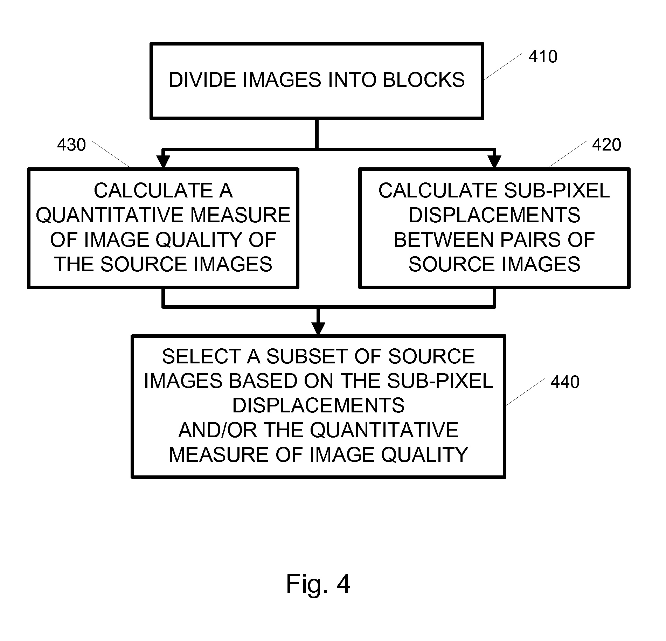

Reference is now made to Fig. 4, which is a flowchart of a method for selecting a subset of source images from a plurality of source images for generating a super-resolution image according to embodiments of the present invention. In operation 410, acquired source images are divided into sub-blocks. This operation is optional and may not be performed to save computing power or when unnecessary. For example, dividing the source images into sub-blocks may not be required if the relative displacement between corresponding pixels of a pair of source images is substantially constant, as will be further discussed herein.

In operation 420, sub-pixel distances between pairs of source images may be calculated. If the source images were divided into sub-blocks, sub-pixel distances between pairs may be calculated per sub-blocks. The sub-pixel distance may be measured as a local property. The source images may be split into sub-blocks, e.g. sub-blocks of 4*4, 8*8, 16*16 pixels, or other divisions as may be required. The displacement between images may be calculated using any applicable method known in the art that is accurate enough, such as the techniques used for motion estimation or image registration between a pair of images. For example, the Kanade-Lucas-Tomasi (KLT) feature tracker method may be used, with accuracy of 1/16 pixel. The sub-pixel distances between a first and a second image may be measured as the Euclidean distance between a first pixel of a first image and the pixel of the second image that is nearest to the first pixel. In other words, the sub-pixel distances may be measured as the Euclidean distance between corresponding pixels of two images or sub-blocks, after the images are aligned.

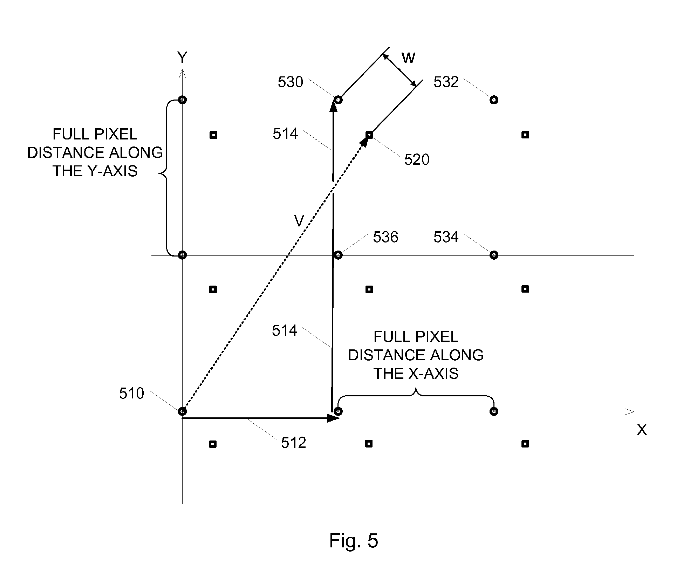

Reference is further made to Fig. 5, which depicts pixel arrangement of two shifted images or sub-blocks. The following explanation applies both to images or sub-blocks of images. Pixels of the first image are represented by circles while pixels of the second image are represented by squares. The displacement between the first image and the second image is depicted as displacement vector V. Thus, pixel 510 of the first image corresponds to pixel 520 of the second image. Pixel 520 is surrounded by four pixels of the first image, pixels 530, 532, 534 and 536, where pixel 530 being the nearest to pixel 520. Thus, the sub-pixel distance between the first and the second image equals the Euclidean distance between pixel 520 and pixel 530, marked as W.

One way of getting to the sub-pixel distance after calculating the displacement between two images would be to first align the two images. Two images may be considered aligned if the absolute value of the projections of the sub-pixel distances on both the x-axis and the y-axis are equal to or less than half of the full pixel distance along that axis. Other alignment criterions made be used. The first image and the second image may be aligned by shifting one of the images by increments of full pixel distances, so that the absolute value of the projections of the sub-pixel distances on both the x-axis and the y-axis are equal or less than half of the full pixel distance along that axis. The full pixel distance is the distance between adjacent pixels. Full pixel distances along the x-axis and the y-axis are marked in Fig. 5. In Fig. 5, the first image may be shifted until pixel 510 would be located in the place of pixel 530, for example, along arrows 512 and 514. The projections of the sub-pixel distances on the x-axis and on the y-axis may be expressed in relative terms with relation to the full pixel distance along that axis, and absolute values of the projections of the sub-pixel distances on the x-axis and y-axis may be used. Thus, when expressed in relative terms and after the images are aligned, the values of the projections on both the x-axis and the y-axis of the sub-pixel distances are kept between 0 to +0.5 (inclusive).

Dividing the source images into sub-blocks may not be necessary if, for example, the images are acquired by cameras, which are slightly displaced one from each other, as depicted in Fig 2. This this case, the relative displacement between each pair of source images is substantially constant for the entire scene presented by the pair. Thus, a single value that represents the sub-pixel distance criterion may be obtained for pairs of source images. Similarly, if the quality of the original or source images is substantially constant all over the image, a single constant value representing the image quality criterion may be obtained for the image.

In many applications, however, the relative displacement between pairs of source images is not constant. In these cases, there would be certain shift in one area of the first image of the pair relative to the second image of the pair and another shift in another area of the first image relative to second image of the pair of images, etc. For example, in frames of a video sequence, there may be relative movement in some areas of the pair of images, for example, if a character moves, while there may be no relative movement in other areas of the pair, for example, in the background. Additionally, if there is a rotational displacement between a pair of source images, this rotational displacement may be approximated by translational relative displacement between sub-blocks of the pair of images. These translational relative displacements may be different for different sub-blocks of the pair of images. Similarly, image quality may not be constant all over an entire image.

According to embodiments of the present invention, the amount of information that may be obtained from a second sub-pixel shifted image increases as the sub-pixel distance increases. Thus, the selected subset of images may include the images having the largest sub-pixel distances between them.

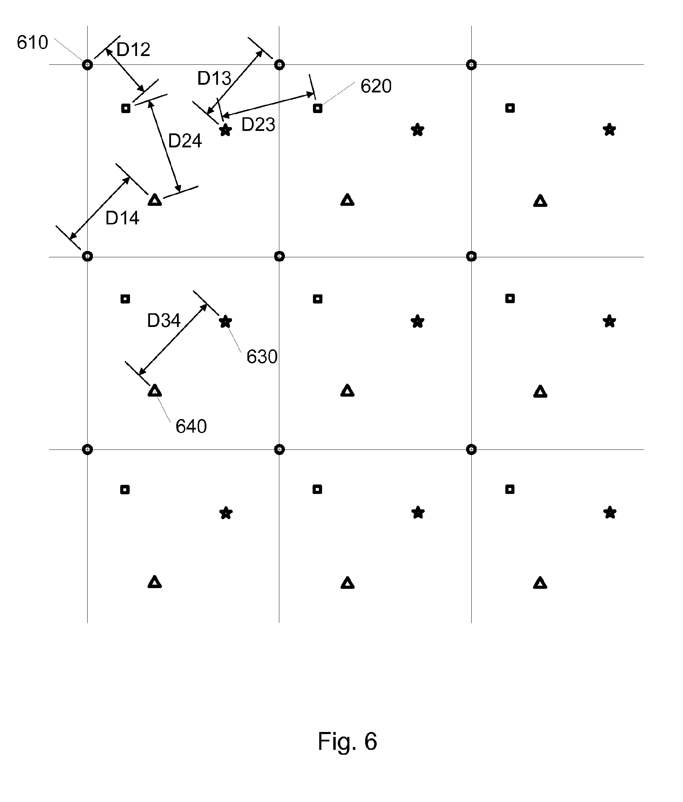

Reference is further made to Fig. 6 which depicts relative pixel locations of an exemplary set of four sub-pixel shifted source images. Pixel locations of a first image 610, second image 620, third image 630 and fourth image 640 are represented by circles, squares, stars, and triangles, respectively. Sub-pixel distances between the images are marked as D12, D13, D24, D23, D14, D34. Sub-pixel distance D12 represents the sub-pixel distance between first image 610 and second image 620; sub-pixel distance D13 represents the sub-pixel distance between first image 610 and third image 630; sub-pixel distance D14 represents the sub-pixel distance between first image 610 and fourth image 640; sub-pixel distance D23 represents the sub-pixel distance between second image 620 and third image 630; sub-pixel distance D24 represents the sub-pixel distance between second image 620 and fourth image 640; and sub-pixel distance D34 represents the sub-pixel distance between third image 630 and fourth image 640. Exemplary values for the sub-pixel distances are D12=0.2, D13=0.31, D24=0.36, D23=0.37, D14=0.3 and D34=0.38. The largest sub-pixel distance is the sub-pixel distance between third image 630 and fourth image 640. Thus, if a subset of two images is to be chosen based on the sub-pixel distances third image 630 and fourth image 640 would be chosen.

If the subset includes more than two images, the sum of all sub-pixel distances in a subset, the sum of the square of all sub-pixel distances in a subset, or a root of the sum of the square of all sub-pixel distances in a subset may be set as the sub-pixel distances selection criterion. If no other selection criterions are used, the subset with the maximal sub-pixel distances selection criterion may be chosen. As used herein, sub-pixel distances selection criterion may refer to a selection criterion that is based on the sub-pixel distances. Other sub-pixel distances selection criterions may be defined. For example, the multiplication of all sub-pixel distances in a subset may be set as the sub-pixel distances selection criterion and the subset with the maximal multiplication of sub-pixel distances may be chosen. Another example would be to set the area confined by subset as the sub-pixel distances selection criterion and selecting the subset that confines the largest area. The sub-pixel distances selection criterion may include a distance threshold. For example, a distance threshold may be set, and if one of the measured sub-pixel distances is smaller than the threshold then the subset that includes this distance may not be considered. Embodiments of the present invention are not limited to a specific method of selecting a subset based on the sub-pixel distances and other methods for considering the sub-pixel distances are possible.

Returning to Fig. 4, in operation 430 a quantitative measure of image quality may be calculated. If the source image was divided into sub-blocks, the quantitative measure of image quality may be calculated per sub-blocks. For example, the quantitative measure of image quality may be calculated for pixels of the image in the range close to the pixel, for example, for the surrounding 4x4 pixels. The amount of information that may be obtained from an image increases as the image quality increases. Thus, the selected subset of images may include the images having the best image quality. Quantitative measure of image quality may be calculated using any applicable method known in the art. Additionally, more than one quantitative measure of image quality may be calculated and used, for example, as weighted average of the results, for the selection of the sub-set of images. For example, the quantitative measure of image quality measure may be image sharpness. The sharper the image is, more information may be obtained by fusion.

In operation 440, a subset of source images may be selected from the plurality of source images based on the sub-pixel distances, the quantitative measure of image quality or on both. A sub-set may be selected per whole images or locally at different areas of the source images. When sub-sets are selected locally, a different sub-set of source images may be selected for different areas of the source images. If the source images were divided into sub-blocks, a sub-set may be selected per sub-blocks. Thus, a different sub-set of source images may be selected for different sub-blocks of the source images, depending on the local properties.

An example for selecting a subset is given hereinbelow:

$$S_{best} = \arg\max_{s}\left\{\alpha \sum_{i\in s} Sh(f_i) + \beta \sum_{i\in s}\sum_{j\in s}\left\|d(f_i, f_j)\right\|^2\right\} \qquad \text{(equation 1)}$$

Where $S$ is the set of source images $S = \{f_i\}_{i=1}^{N}$, $S_{best}$ $S_{best}$ is the selected subset, $s$ is the subset of selected images $s = \{f_i : f \in S\}_{i=1}^{M}$, where $N$ is the number of images in the source image group, $M$ is the number of images in the selected subset of images, and $M < N$. $Sh(f_i)$ is image sharpness for a single image $i$, and $\sum_{i\in s} Sh(f_i)$ is the sum of image sharpness over a subset. $\sum_{i\in s}\sum_{j\in s}\left\|d(f_i, f_j)\right\|^2$ is the square sum of the Euclidean sub-pixel distances over a subset. $\alpha$ (alpha) and $\beta$ (beta) are scalars that give weights to the image sharpness measure $Sh$ and to the sub-pixel distances, respectively. Argmax gives the values of $s$ in which the value of the function is maximal, that is, argmax gives the subset of images for which the weighted sum of the image sharpness and sub-pixel distances is maximal.

The quantitative measure of image quality measure in the example is image sharpness $Sh(f)$ which may be calculated by:

$$Sh(f) = \sum_{n}\sum_{m}\left(\left\|\frac{\partial f}{\partial x}[n,m]\right\|^2 + \left\|\frac{\partial f}{\partial y}[n,m]\right\|^2\right) \qquad \text{(equation 2)}$$

Where n and m stand for pixel index within an image or a sub block of an image. For example f[0,0] means upper left pixel. Equations 1 and 2 may be adjusted to selection of a sub-set per whole images or per sub-blocks.

Some embodiments of the present invention may be implemented in software for execution by a processor-based system, for example, the method for generating super-resolution images and the method for selecting a subset of source images. For example, embodiments of the present invention may be implemented in code or software and may be stored on a non-transitory storage medium having stored thereon instructions which, when executed by a processor, cause the processor to perform methods as discussed herein, and can be used to program a system to perform the instructions. The non-transitory storage medium may include, but is not limited to, any type of disk including floppy disks, optical disks, compact disk read-only memories (CD-ROMs), rewritable compact disk (CD-RW), and magneto-optical disks, semiconductor devices such as read-only memories (ROMs), random access memories (RAMs), such as a dynamic RAM (DRAM), erasable programmable read-only memories (EPROMs), flash memories, electrically erasable programmable read-only memories (EEPROMs), magnetic or optical cards, or any type of media suitable for storing electronic instructions, including programmable storage devices. Other implementations of embodiments of the present invention may comprise dedicated, custom, custom made or off the shelf hardware, firmware or a combination thereof.

Embodiments of the present invention may be realized by a system that may include components such as, but not limited to, a plurality of central processing units (CPU) or any other suitable multi-purpose or specific processors or controllers, a plurality of input units, a plurality of output units, a plurality of memory units, and a plurality of storage units. Such system may additionally include other suitable hardware components and/or software components.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

**EP 2 937 835 A1**

**Claims**

1. A method for generating a super-resolution image, the method comprising:

   obtaining a plurality of source images of a scene, the source images are sub-pixel shifted views of the scene;
   calculating sub-pixel distances between pairs of source images;
   selecting a subset of source images from the plurality of the source images based at least on the sub-pixel distances; and
   generating the super-resolution image from the subset, the super-resolution image having a higher resolution than each of the source images.

2. The method of claim 1, wherein selecting comprises:

   when the subset includes two source images, selecting the two source images for which a sub-pixel distance is maximal; and
   when the subset includes more than two source images, selecting the subset by:

      calculating sums of the sub-pixel distances for groups of source images, the groups consisting of an equal number of more than two source images; and
      selecting the group for which a sum of the sub-pixel distances is maximal.

3. The method of claim 1, wherein selecting comprises:

   when the subset includes two source images, selecting the two source images for which a sub-pixel distance is maximal; and
   when the subset includes more than two source images, selecting the subset by:

      calculating multiplication of the sub-pixel distances for groups of source images, the groups consisting of an equal number of more than two source images; and
      selecting the group for which a multiplication of the sub-pixel distances is maximal.

4. The method of any of claims 1-3, wherein the distances are calculated locally at different areas of the pairs of source images.

5. The method of any of claims 1-4, comprising:

   calculating a quantitative measure of image quality of the original images,
   wherein the selection of the subset is based also on the measure of image quality.

6. The method of claim 5, wherein the quantitative measure of image quality is image sharpness.

7. The method of any of claims 5-6, wherein the measure of image quality is calculated locally at different areas of the source images.

8. The method of any of claims 4 and 7, wherein selecting the subset is performed locally at the different areas of the source images.

9. The method of any of claims 1-8, comprising:

   determining the number of source images in the subset based on available computing power.

10. The method of claim 9, comprising:

    determining how many source images to acquire based on the number of source images in the subset.

11. A computer readable medium comprising instructions which when implemented in a data processing system, cause the system to perform the method of any preceding claim.

**12.** A system for generating a super-resolution image, the system comprising:

a memory; and
a processor configured to implement the method of any of claims 1-10.

Fig. 1

Fig. 2

DETERMINE THE NUMBER OF IMAGES TO BE USED FOR GENERATING A SUPER RESOLUTION IMAGE — 302

DETERMINE THE NUMBER OF ACQUIRED IMAGES FROM WHICH A SUBSET OF THE IMAGES USED FOR GENERATING THE SUPER RESOLUTION IMAGE IS SELECTED — 304

OBTAIN A PLURALITY OF SOURCE IMAGES OF A SCENE (ACQUIRED IMAGES) — 310

SELECT A SUBSET FROM THE ACQUIRED IMAGES — 320

GENERATE A SUPER RESOLUTION IMAGE FROM THE SUBSET — 330

Fig. 3

DIVIDE IMAGES INTO BLOCKS — 410

430 —

CALCULATE A QUANTITATIVE MEASURE OF IMAGE QUALITY OF THE SOURCE IMAGES

CALCULATE SUB-PIXEL DISPLACEMENTS BETWEEN PAIRS OF SOURCE IMAGES — 420

SELECT A SUBSET OF SOURCE IMAGES BASED ON THE SUB-PIXEL DISPLACEMENTS AND/OR THE QUANTITATIVE MEASURE OF IMAGE QUALITY — 440

Fig. 4

Fig. 5

Fig. 6

Europäisches Patentamt

European Patent Office

Office européen des brevets

## EUROPEAN SEARCH REPORT

Application Number

EP 14 16 5409

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 684 506 A1 (SEIKO EPSON CORP [JP]) 26 July 2006 (2006-07-26) | 1,11,12 | INV. G06T3/40 |
| Y | * claim 1 * <br> * figure 3 * <br> * paragraphs [0019], [0029], [0034], [0040] * | 2,3 | |
| Y | GB 2 506 686 A (CANON KK [JP]) 9 April 2014 (2014-04-09) * page 7, line 22 - line 26 * | 2,3 | |

TECHNICAL FIELDS SEARCHED (IPC)

G06T

~~The present search report has been drawn up for all claims~~

| Place of search | Date of completion of the search | Examiner |
|---|---|---|
| Munich | 23 October 2014 | Winkler, Gregor |

Europäisches
Patentamt

European
Patent Office

Office européen
des brevets

Application Number

EP 14 16 5409

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3(completely); 11, 12(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 16 5409

The Search Division considers that the present European patent application does not comply with the
requirements of unity of invention and relates to several inventions or groups of inventions, namely:

1. claims: 1-3(completely); 11, 12(partially)

   First invention: Claims 1-3 and claims 11 and 12 when being
   dependent on claims 1-3.
   ---

2. claims: 4(completely); 8, 11, 12(partially)

   Second invention: Claims 4 and 8 when being dependent on
   claim 1 and claims 11 and 12 when being dependent on claim
   4.
   ---

3. claims: 5-7(completely); 8, 11, 12(partially)

   Third invention: Claims 5-8, when being dependent on claim 1
   and claims 11 and 12 when being dependent on claim 5.
   ---

4. claims: 9, 10(completely); 11, 12(partially)

   Fourth invention: Claims 9 and 10 when being dependent on
   claim 1 and claims 11 and 12 when being dependent on claim
   9.
   ---

## ANNEX TO THE EUROPEAN SEARCH REPORT
## ON EUROPEAN PATENT APPLICATION NO.

EP 14 16 5409

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2014

| Patent document cited in search report | | Publication date | Patent family member(s) | | Publication date |
|---|---|---|---|---|---|
| EP 1684506 | A1 | 26-07-2006 | CN | 1879401 A | 13-12-2006 |
| | | | EP | 1684506 A1 | 26-07-2006 |
| | | | JP | 4325625 B2 | 02-09-2009 |
| | | | US | 2007133901 A1 | 14-06-2007 |
| | | | US | 2010232703 A1 | 16-09-2010 |
| | | | WO | 2005046221 A1 | 19-05-2005 |
| GB 2506686 | A | 09-04-2014 | NONE | | |

EPO FORM P0459

For more details about this annex : see Official Journal of the European Patent Office, No. 12/82